# EUROPEAN PATENT APPLICATION

(11) **EP 1 488 686 A1**
(43) Date of publication of application: **22.12.2004**
(21) Application number: 04253594.8
(22) Date of filing: 16.06.2004
(51) Int. Cl.: A01G 9/02

(54) **Potted plant carrier**

(30) Priority: 16.06.2003 GB 0313934
(71) Applicant: Paish, Reginald W., Hawkesbury Upton Badminton, Gloucestershire GL9 1AZ (GB)
(72) Inventor: Paish, Reginald W., Hawkesbury Upton Badminton, Gloucestershire GL9 1AZ (GB)
(74) Representative: Harrison, Ivor Stanley

(57) **Abstract**

Apparatus for carrying potted plants, comprises a handle means attachable to a support means for receiving a plant pot, in which the handle and support means cooperate when attached together to define a space therebetween to receive the base of the plant pot, the support means including drainage means in communication with the base of the plant pot in use.

## Description

The invention relates to a carrier for potted plants. In particular the carrier provides means for lifting and moving potted plants from place to place or simply rotating the pots during pruning or watering.

It is desirable to have plants contained within pots for use as decoration or ornamentation around the home and garden as well as in places of work or retail outlets. It is necessary occasionally to lift and carry the pots containing the plants from one place to another, when for example rearranging the room or particular area of the garden. More commonly the pots may need to be slightly moved or rotated during pruning or watering of the plants contained within, so as to gain access to the dead leaves or to direct the water to the potting medium. The pots used for potting plants are often large and heavy and therefore difficult to pick up and carry or move. Two hands would be required to grip the pot and often the help of another person would be required if the pot was to be moved over a distance.

A carrier for use with potted plants is described in GB2365742 and has a handle which extends through the growing medium and is attached to the base of the pot. In use, a carrier of this type would need to be placed in a receptacle suitable for receiving any excess water which escapes from the plant pot itself, or which can be used to receive gravel which, when wet, creates a moist atmosphere around the plant. On removal of the pot from the receptacle using the handle, there is a probability that water and/or dirt will contaminate the surface on which the pot is next placed.

It is therefore an object of the present invention to provide a potted plant carrier which avoids this problem.

According to one aspect, the present invention provides a carrier for potted plants, the carrier comprising at least one handle means attachable to a support means for receiving a plant pot, in which the or each handle and support means cooperate when attached together to define a space therebetween to receive the base of the plant pot, the support means including drainage means in communication with the base of the plant pot in use.

The support means, which may be formed integrally as a raised plinth in a tray or dish for receiving a plant pot, may be made from a plastics material and may be of any suitable shape in order to receive a plant pot, but is preferably circular.

The or each handle means extends in use above the growing medium contained in the pot and may be sufficiently elongate to allow any plants potted in the potting medium to grow along side and be supported by the handle means.

The support means preferably includes a threaded stud protruding from the centre and the handle means has a corresponding threaded aperture in which to receive the threaded stud. In use, the stud will extend through the or a drainage hole formed in the base of the plant pot but the presence of the stud precludes the use of crocks within the pot and adjacent to that particular drainage hole, whereby there would be a risk of growing medium, entrained in irrigation water added to the upper part of the pot, passing through into the tray. The lower end of the handle therefore preferably includes a flange element for sealing around the stud; the flange element is optionally provided with smaller-diameter drainage holes which would resist the passage therethrough of growing medium, while still allowing drainage, in the event that the pot contained no other drainage hole. Preferably, however, the pot will include an array of outer drainage holes or apertures around the central aperture, such outer apertures being in communication with the drainage means formed in the support means, and the flange element may include a resilient washer for sealing purposes. The flange element may be formed on its underside with such drainage holes, constituted by grooves or recesses which, together with the base of the pot in use, define channels which allow excess water from the growing medium to pass through to the drainage hole or holes in the base of the pot and thence to the drainage means formed in the support means.

The support means, which may comprise a raised zone, centrally located in the tray, preferably has a boss extending upwardly from the raised zone and having the threaded stud engaged therein. The drainage means preferably comprises one or more grooves or channels formed in the support means and communicating with a peripheral zone or area which, in use, accommodates the feet of the pot, that is, those peripheral edge formations which maintain the base of the pot spaced from the supporting surface and which allow drainage water to flow away from beneath the pot. The drainage grooves or channels are preferably disposed radially and may be interconnected by annular grooves or channels to aid distribution and outflow of drainage water percolating through the growing medium. The grooves or recesses formed in the underside of the flange element may also be of annular configuration, intersected by radial grooves or recesses. The flange element may either be formed integrally with the lower end of the handle means or separately, being attachable thereto in use by snap-engagement or other means such as a screw thread or a bayonet-type fitting. For example, the lower end of the handle means may be formed as a radially-enlarged collar incorporating a female threaded socket for receiving the stud attached to the base, and the flange element may comprise an annular disc having cut-away portions formed in its inner circumference to define an array of inwardly-extending teeth which engage in use in an annular groove formed around the lower region of the collar with a twist-and-lock mechanism, the lower wall defining the groove being provided with at least one protrusion for passing through a cut-away portion and engaging behind a tooth.

Embodiments of the invention will no be described by way of example with reference to the accompanying drawings, of which:
Figure 1 is a perspective exploded view of a carrier according to the invention;
Figure 2 is a sectional view showing the carrier together with a plant pot containing potting medium; and
Figure 3 is a fragmentary perspective view from below of the handle and flange element of a carrier according to the invention.

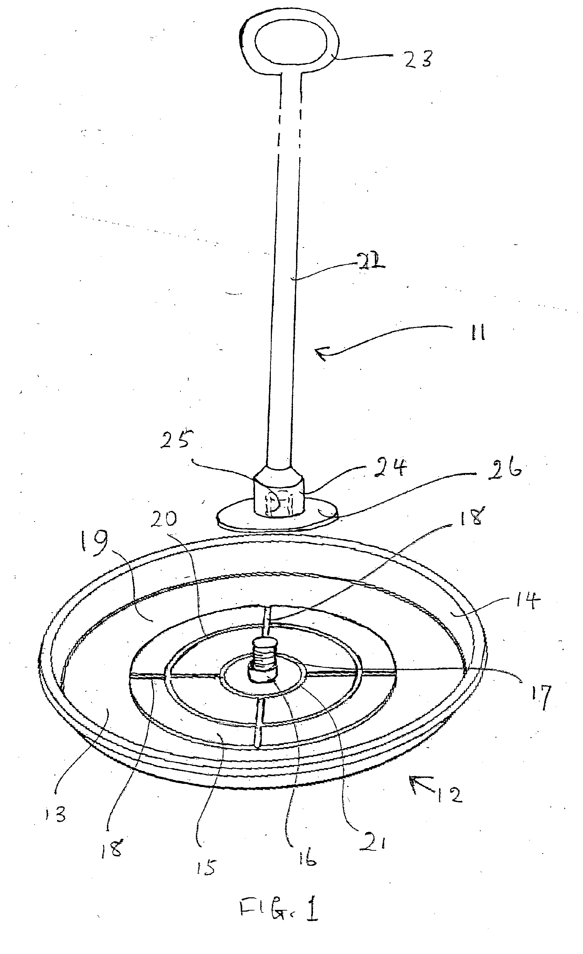

With reference firstly to Figure 1, the apparatus consists of a handle member 11 and a plant pot tray 12 having a base indicated generally 13 and an upstanding peripheral wall 14. The base 13 includes a central raised zone or plinth 15 from which extends a central boss 16 containing an upstanding screw-threaded stud 17. The raised area 15 includes radial grooves or channels 18 communicating with an annular peripheral base zone 19 and interconnected by annular grooves 20, 21.

The handle 11 includes an upstanding shaft 22 with a closed loop 23 formed at the upper end for manual or, in a larger-scale, machine lifting purposes or for suspending the apparatus from a suitable hook. At the lower end, the shaft 22 is formed with a radially-enlarged collar 24 in which is formed a tapped aperture 25. A radially-extending flange 26 surrounds the lower end of the collar 24.

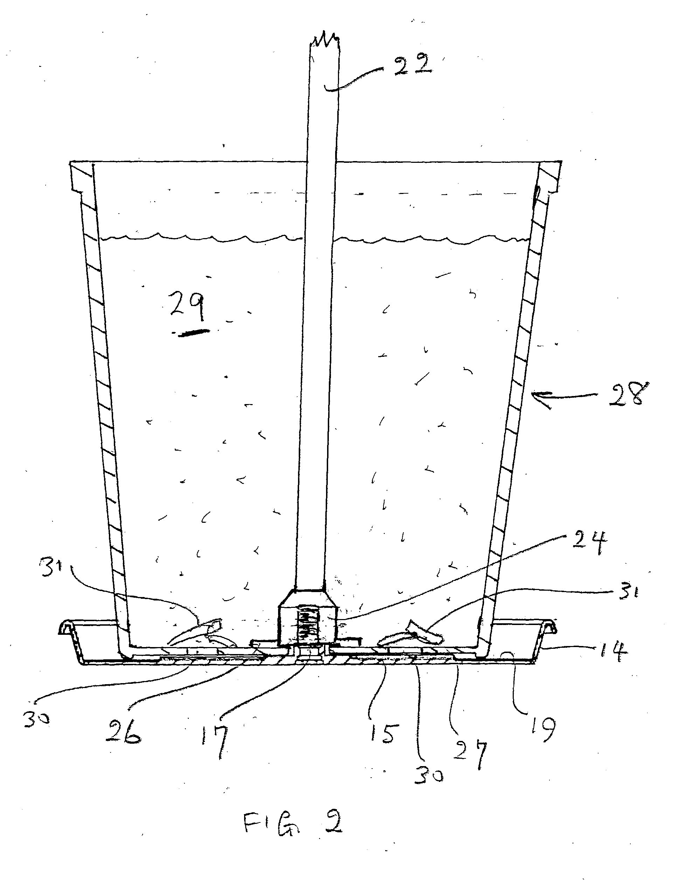

With reference now to Figure 2, the shaft 22 has been engaged with the tray 12 by virtue of the stud 17 being screwed into the recess formed in the collar 24. A gap is thus defined between the flange 26 and the raised central zone 15 of the tray, this gap receiving the base 27 of a flower pot 28. The flower pot is subsequently filled with growing medium, such as loam or a peat-based compost, 29. The base 27 of the flower pot has drainage holes 30 formed therein, such holes communicating with the grooves or channels 18, 20, 21 formed in the raised zone of the base of the tray 12.

As can be seen from Figure 2, the raised central zone 15 of the base 13 of the tray 12 supports the lower surface of the base 27 of the flower pot so that, on screwing together the tray and handle portions of the apparatus, the base of the pot will not be subject to deformation stresses which could result in cracking. The flange 26 seals the central aperture through which the boss 16 and stud 17 extend against ingress of growing medium, whereas the drainage apertures 30 can be covered internally by broken crocks 31 to permit drainage without concomitant loss of growing medium. The entire assembly, including the plant pot, growing medium and any plant contained therein, can thus be moved around at will without water or vestiges of growing medium soiling any surface on which it is placed.

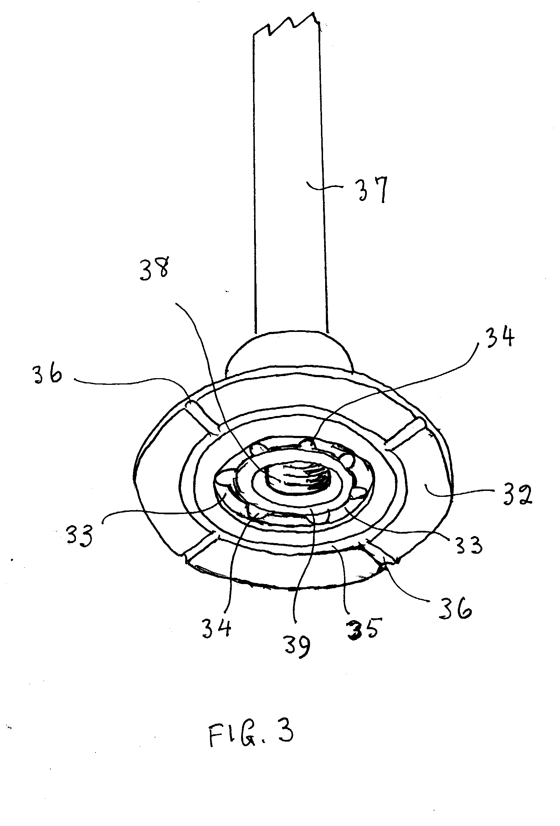

With reference to Figure 3, another embodiment is shown in which the flange element is formed as an annular disc 32. The inner circumference is formed with an array of inwardly-projecting teeth 33 defined by cut-outs 34. The lower face of the disc 32 has an annular groove 35 with radial grooves 36 extending therefrom to the outer circumference. The lower end of the handle 37 has a screw-threaded bush 38 carried therein and has an annular groove formed around the lower outer periphery, defined by a lower annular wall 39. As shown, the teeth 33 are adjacent to or contiguous with the groove and a pair of diametrically-disposed projections (not shown) which fit through the cut-outs are engaged behind the teeth. In use, the base or under-surface of the flange element is disposed against the upper surface of a plant pot base and excess water drains through the channels defined between the grooves 35, 36 and the base of the pot, while growing medium is retained in the pot. It has been found that crocks are not necessary and that sufficient water is held back to prevent the growing medium from drying out over the course of a day, while not retaining so much water that aeration of the plant roots is prevented.

The central raised zone or plinth 15 of the tray of Figure 1 may be formed separately from the tray as a disc and preferably has drainage holes formed therethrough, preferably through the disc in communication with the drainage means formed therein constituted by grooves or channels.

## Claims

1. Apparatus for carrying potted plants, the apparatus comprising at least one handle means attachable to a support means for receiving a plant pot, in which the or each handle and support means cooperate when attached together to define a space therebetween to receive the base of the plant pot, the support means including drainage means in communication with the base of the plant pot in use.

2. Apparatus according to claim 1, in which the support means is formed integrally as a raised plinth in a tray or dish for receiving a plant pot.

3. Apparatus according to claim 1 or claim 2, in which the support means includes a threaded stud protruding from the centre and the handle means has a corresponding threaded aperture in which to receive the threaded stud, the stud extending in use through the or a drainage hole formed in the base of the plant pot.

4. Apparatus according to any preceding claim, in which the lower end of the handle includes a flange element for sealing around the stud.

5. Apparatus according to claim 4, in which the flange element is provided with drainage holes.

6. Apparatus according to claim 5, in which the flange element is formed on its underside with drainage holes constituted by grooves or recesses which, together with the base of the pot in use, define drainage channels.

7. Apparatus according to any preceding claim, in which the support means including a boss extending upwardly and having a threaded stud engaged therein.

8. Apparatus according to any preceding claim, in which the drainage means of the support means comprises one or more grooves or channels formed in the support means and communicating with the periphery thereof.

9. Apparatus according to claim 8, in which the drainage grooves or channels are disposed radially and are interconnected by annular grooves or channels.

10. Apparatus according to any of claims 4 to 9, in which the flange element is formed separately from the handle means and is attachable thereto in use.
